# FASCICULE DE BREVET EUROPEEN

(11) **EP 2 862 896 B1**
(45) Date de publication et mention de la délivrance du brevet: **13.06.2018**
(21) Numéro de dépôt: 14185009.9
(22) Date de dépôt: 16.09.2014
(51) Int. Cl.: C08L 23/06, C08L 23/08, H01B 3/44, C08L 27/06, C08L 27/14, C08L 27/16, C08L 29/04, C08L 31/04

(54) **Câble d'énergie et/ou de télécommunication comprenant une couche polymère résistante aux rayures**
Elektrisches Kabel oder Telekommunikationskabel mit einer kratzfesten Polymerschicht
Electric or telecommunication cable comprising a scratch-resistant polymeric layer

(30) Priorité: 18.10.2013 FR 1360187
(43) Date de publication de la demande: 22.04.2015
(73) Titulaire: Nexans, 92400 Courbevoie (FR)
(72) Inventeur: Bahloul, Walid, 69100 VILLEURBANNE (FR); Toure, Birane, 69100 VILLEURBANNE (FR); Abeguile, Mikael, 69400 Villefranche-sur-Saône (FR); Keromnes, Laurent, 69630 Chaponost (FR)
(74) Mandataire: Peguet, Wilfried

(56) Documents cités:
- EP-A2- 0 323 581
- WO-A1-01/12685
- US-A- 5 283 120
- US-A- 5 480 721
- KWANG S SUH ET AL: "Charge Behavior in Polyethylene-Ionomer Blends", IEEE TRANSACTIONS ON DIELECTRICS AND ELECTRICAL INSULATION, IEEE SERVICE CENTER, PISCATAWAY, NJ, US, vol. 4, no. 1, 1 février 1997 (1997-02-01) , pages 58-63, XP011014760, ISSN: 1070-9878, DOI: 10.1109/94.590867

## Description

La présente invention concerne un câble d'énergie et/ou de télécommunication comprenant une couche polymère résistante aux rayures.

Elle s'applique typiquement, mais non exclusivement, aux domaines des câbles d'énergie à basse tension (notamment moins de 6 kV), moyenne tension (notamment de 6 à 45-60 kV) ou à haute tension (notamment supérieur à 60 kV, et pouvant aller jusqu'à 800 kV), qu'ils soient à courant continu ou alternatif.

Le document EP-1 857 502 décrit un câble électrique comprenant une couche polymère ignifugeante entourant un fil conducteur électrique, ladite couche polymère ayant de bonnes propriétés anti-abrasion et étant obtenue à partir de polypropylène, de 7 à 40% en poids d'un copolymère d'éthylène polaire, et plus de 43% en poids d'un hydroxyde métallique ou d'un composé hydraté.

Toutefois, cette couche polymère ne présente pas de bonnes propriétés de résistance aux rayures. En effet, elle peut être facilement dégradée par des objets pointus, entrainant ainsi une dégradation de ses propriétés isolantes et augmentant les risques de claquage électrique au sein du câble.

Kwang S. Suh et al. (« Charge behavior in polyethylene-ionomer blends », IEEE Transactions on Dielectrics and Electrical Insulation, 1997, vol. 4, pages 58-63) décrit le comportement des charges dans un mélange polymère d'éthylène/ionomère.

Les documents EP0323581 et US5283120 décrivent une composition comprenant du polyèthylène et un ionomère, possédant une résistance aux arborescences d'eau.

Le document WO01/12685 décrit une composition utilisable dans un environnement réfrigéré, comprenant un ionomère et un ou plusieurs polym ères.

Le document US5480721 décrit un matériau thermoplastique multicouche réalisé à partir d'une composition comprenant un polymère fluoré, un polymère non fluoré et un ionomère.

Le but de la présente invention est de pallier les inconvénients des techniques de l'art antérieur en proposant notamment une couche polymère pour câble d'énergie et/ou de télécommunication présentant de bonnes propriétés de résistance aux rayures, tout en garantissant une bonne adhésion autour de l'élément qu'elle entoure et de bonnes propriétés anti-abrasion.

La présente invention a pour objet un câble d'énergie et/ou de télécommunication comprenant un élément conducteur allongé entouré par au moins une couche polymère, caractérisé en ce que la couche polymère est obtenue à partir d'une composition polymère comprenant :
- un premier polymère de type éthylénique, le Melt Flow Index (MFI) du premier polymère étant strictement inférieur à 2,0 g/10 min (190°C/2,16kg) selon la norme ASTM D1238, et
- un second polymère d'éthylène comprenant des groupements ioniques, la quantité du second polymère étant supérieure à la quantité du premier polymère, dans la composition polymère, la composition polymère comprenant plus de 40% en poids du second polymère.

Grâce à l'invention, la couche polymère présente une très bonne résistance aux rayures tout en garantissant de bonnes propriétés anti-abrasion. En outre, elle présent une très bonne adhésion autour de l'élément qu'elle entoure, que ce soit un élément conducteur allongé ou une autre couche polymère.

Le premier polymère de l'invention peut être un unique polymère de type éthylénique ou un mélange de plusieurs polymères de type éthylénique.

On entend par « polymère de type éthylénique » un polymère dont la chaîne macromoléculaire comprend des motifs monomères -(CH₂-C(X₁)(X₂))-, X₁ et X₂ n'étant pas des groupements alkyles. Ainsi, les motifs monomères -(CH₂-C(X₁)(X₂))- ne comprennent pas notamment les motifs -(CH₂-CH₂-CH₂)- ou -(CH₂-CH(CH₃))-.

A titre d'exemple, X₁ et/ou X₂ peuvent être choisis indépendamment l'un de l'autre parmi un atome d'hydrogène (H), un ester (-OC(O)R), un halogène, un hydroxyle (OH).

Lorsque X₁ et X₂ sont des atomes d'hydrogène, on parlera alors de polymère d'éthylène.

Le premier polymère peut être plus particulièrement un polymère thermoplastique.

Dans la présente invention, on entend par « polymère d'éthylène » un polymère du type homopolymère d'éthylène ou copolymère d'éthylène.

Selon une première variante, le premier polymère peut être un polymère d'éthylène (cf. lorsque X₁ = H et X₂ = H). Le polymère d'éthylène peut être choisi parmi un polyéthylène linéaire basse densité (LLDPE) ; un polyéthylène basse densité (LDPE) ; un polyéthylène moyenne densité (MDPE) ; un polyéthylène haute densité (HDPE) ; un copolymère d'éthylène et d'acétate de vinyle (EVA) ; un copolymère d'éthylène et d'acrylate de butyle (EBA) ; un copolymère d'éthylène et d'acrylate de méthyle (EMA) ; un copolymère d'éthylène et de 2-hexyléthyl acrylate (2HEA) ; un copolymère d'éthylène et d'alpha-oléfine tels que par exemple les polyéthylène-octène (PEO) ; un copolymère d'éthylène et de propylène (EPR) ; et un terpolymère d'éthylène et de propylène (EPT) tels que par exemple les terpolymères d'éthylène propylène diène monomère (EPDM).

Selon une seconde variante, le premier polymère peut être choisi parmi un polyacétate de vinyle (PVAc) (avec notamment X₁ = H et X₂ = -O(CO)CH₃), un alcool polyvinylique (PVA) (avec notamment X₁ = H et X₂= -OH), un polychlorure de vinyle (PVC) (avec notamment X₁ H et X₂ = Cl), un polyfluorure de vinylidène (PVDF) (avec notamment X₁ = F et X₂ = F), un polyfluorure de vinyle (PVF) (avec notamment X₁ = H et X₂ = F), et un de leurs mélanges.

De préférence, le premier polymère peut être différent du second polym ère.

Dans un mode de réalisation préféré, le premier polymère de l'invention a un Melt Flow Index (MFI) strictement inférieur à 2,0 g/10 min (190 °C/2,16kg) selon la norme ASTM D1238.

Le second polymère de l'invention peut être un unique polymère d'éthylène comprenant des groupements ioniques, ou un mélange de plusieurs polymères d'éthylène comprenant des groupements ioniques. On peut dire de façon particulière que le second polymère d'éthylène est du type ionomère.

Plus particulièrement, le second polymère comprend des motifs monomères du type -(CH₂-CH₂)- et des motifs monomères comprenant des groupements ioniques.

Le second polymère peut être plus particulièrement un polymère thermoplastique.

Lorsque le premier polymère, le second polymère, ou le premier et le second polymères sont du type thermoplastique, on pourra parlé de composition polymère thermoplastique.

Les groupements ioniques du second polymère sont de préférence des groupements carboxylate ionique.

A titre d'exemple, le second polymère peut être un copolymère d'éthylène et d'acide méthacrylique ou un copolymère d'éthylène et d'acide acrylique.

Le second polymère peut être plus particulièrement associé à un cation métallique, notamment choisi parmi le sodium, le potassium et le zinc, et de préférence le zinc. La quantité (pourcentage en poids) du second polymère est supérieure à la quantité (pourcentage en poids) du premier polymère, dans la composition polymère.

Dans un autre mode de réalisation préféré, la composition polymère peut comprendre plus de 40 % en poids du second polymère, et de préférence plus de 50 % en poids du second polymère, par rapport au poids total de la composition polymère. Elle peut comprendre moins de 80 % en poids du second polymère, par rapport au poids total de la composition polymère.

Entre 40 et 80% en poids de second polymère dans la composition, les propriétés mécaniques du type résistance aux rayures sont significativement améliorées.

De préférence, la composition polymère peut comprendre de 50 à 65 % en poids du second polymère, par rapport au poids total de la composition polymère.

Dans un autre mode de réalisation préféré, la composition polymère peut comprendre plus de 20 % en poids du premier polymère, par rapport au poids total de la composition polymère. Elle peut comprendre moins de 60 % en poids du premier polymère, et de préférence moins de 50 % en poids du premier polymère, par rapport au poids total de la composition polymère.

De préférence, la composition polymère peut comprendre de 30 à 50 % en poids du premier polymère, par rapport au poids total de la composition polymère.

Dans un autre mode de réalisation préféré, la composition polymère peut comprendre plus de 60% en poids de polymères, de préférence plus de 80% en poids de polymères, de préférence plus de 90 % en poids de polymères, et de façon particulièrement préférée plus de 95% en poids de polymères, par rapport au poids total de la composition polymère. On entend plus particulièrement par « polymères » l'ensemble des premier et second polymères constitutifs de la composition polymère de l'invention.

Afin de diminuer la chaleur de combustion de la composition polymère de l'invention, ou en d'autres termes de réduire le taux de combustibilité, la composition polymère peut comprendre en outre au moins une charge minérale.

La charge minérale de l'invention peut être choisie parmi une charge ignifugeante et une charge inerte (ou charge non combustible), ou un de leurs mélanges.

A titre d'exemple, la charge ignifugeante, qui est une charge minérale apte à libérer de l'eau lors de sa décomposition par élévation de température (i.e. charge minérale ignifugeante hydratée), peut être choisie parmi les hydroxydes métalliques tels que par exemple le trihydroxyde d'aluminium (Al(OH)₃) ou le dihydroxyde de magnésium (Mg(OH)₂). Les charges minérales ignifugeantes employées agissent principalement par voie physique en se décomposant de manière endothermique (e.g. libération d'eau), ce qui a pour conséquence d'abaisser la température de la couche polymérique et de limiter la propagation des flammes le long du câble.

La composition polymère peut comprendre au moins 75 parties en poids de charge ignifugeante par rapport à 100 parties en poids de polymère dans la composition polymère, de préférence au moins 90 parties en poids de charge ignifugeante par rapport à 100 parties en poids de polymère dans la composition polymère, et encore plus préférentiellement au moins 150 parties en poids de charge ignifugeante par rapport à 100 parties en poids de polymère dans la composition polymère. Elle peut comprendre au plus 200 parties en poids de charge ignifugeante par rapport à 100 parties en poids de polymère dans la composition polymère.

La charge inerte peut être de la craie, du talc, de l'argile, ou du noir de carbone.

La composition polymère peut comprendre au moins 0,1 partie en poids de charge inerte par rapport à 100 parties en poids de polymère dans la composition polymère, de préférence au moins 1,0 partie en poids de charge inerte par rapport à 100 parties en poids de polymère dans la composition polymère. Elle peut comprendre au plus 50 parties en poids de charge inerte par rapport à 100 parties en poids de polymère dans la composition polymère, et de préférence au plus 10 parties en poids de charge inerte par rapport à 100 parties en poids de polymère dans la composition polymère.

Selon une autre caractéristique de l'invention, et afin de garantir un câble dit HFFR pour l'anglicisme « *Halogen-Free Flame Retardant* », le câble d'énergie et/ou de télécommunication, ou en d'autres termes les éléments qui composent ledit câble, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La composition polymère peut typiquement comprendre en outre un ou plusieurs additifs pouvant être ajouté(s) à la composition polymère dans une quantité de 0,01 à 20 parties en poids pour 100 parties en poids de polymères dans la composition polymère. Les additifs sont bien connus de l'homme du métier et peuvent être notamment choisis parmi des agents de protection (e.g. antioxydants, anti-UV, anti-cuivre), des agents de mise en oeuvre (e.g. plastifiants, lubrifiants), des agents de couplage, des agents compatibilisants, et des pigments.

On entend par « câble d'énergie et/ou de télécommunication » tout câble électrique et/ou optique, destiné au transport d'énergie et/ou à la transmission de données.

Plus particulièrement, ce type de câble peut comprendre un ou plusieurs conducteur(s) électrique(s) et/ou optique(s) (i.e. élément(s) conducteur(s) allongé(s)) entouré(s) par au moins une couche polymère conforme à l'invention.

Plus particulièrement, l'élément conducteur allongé peut être un élément électriquement conducteur allongé, pouvant être un fils métallique ou une pluralité de fils métalliques, torsadé(s) ou non, notamment en cuivre ou en aluminium, ou un de leurs alliages.

De préférence, l'élément conducteur allongé se trouve au centre du câble, et la ou les couches polymères composant le câble entourent donc ledit élément conducteur allongé de façon coaxiale.

La couche polymère de l'invention peut être une couche électriquement isolante en contact ou non avec le ou les conducteur(s) électrique(s) et/ou optique(s) composant le câble. La couche électriquement isolante peut avoir une constante d'isolation ki supérieure à 0,0367 MOhm.km (selon la norme IEC 60502).

Elle peut être également une gaine de protection entourant un ou plusieurs conducteur(s) électrique(s) et/ou optique(s) électriquement isolé(s).

La couche polymère de l'invention peut être ainsi tout type de couche dans un câble, s'étendant le long de l'élément conducteur allongé et entourant ledit élément conducteur allongé.

A titre d'exemple, elle peut être :
- une couche électriquement isolante directement en contact physique avec l'élément conducteur allongé ;
- une couche de protection entourant une couche électriquement isolante.

La couche polymère de l'invention peut être mise en oeuvre par des procédés bien connus de l'homme du métier, tel que par exemple par extrusion. On parle alors de couche polymère extrudée.

De préférence, la couche polymère de l'invention est une couche thermoplastique, ou en d'autres termes une couche qui n'est pas réticulée par des techniques bien connues de l'homme du métier.

Dans le câble d'énergie et/ou de télécommunication de l'invention, la couche polymère peut être avantageusement la couche positionnée la plus à l'extérieure du câble.

Dans un premier mode de réalisation particulier, le câble de l'invention peut comprendre l'élément conducteur allongé entouré par une unique couche (i.e. monocouche) du type couche polymère telle que définie dans l'invention, cette couche étant directement en contact physique avec ledit élément conducteur allongé.

Dans un second mode de réalisation particulier, le câble de l'invention peut comprendre en outre une couche intermédiaire, positionnée entre l'élément conducteur allongé et la couche polymère.

Ladite couche intermédiaire peut être obtenue à partir d'une composition polymère comprenant au moins un polymère choisi parmi le premier polymère, le second polymère, et leur mélange ; le premier polymère et le second polymère étant ceux tels que décrits dans la présente invention.

Cette couche intermédiaire peut être mise en oeuvre par des procédés bien connus de l'homme du métier, tel que par exemple par extrusion. On parle alors de couche intermédiaire extrudée.

De préférence, la couche intermédiaire de l'invention est une couche thermoplastique, ou en d'autres termes une couche qui n'est pas réticulée par des techniques bien connues de l'homme du métier.

De préférence, la couche intermédiaire est directement en contact physique avec l'élément conducteur allongé d'une part, et la couche polymère de l'invention, d'autre part.

Un autre objet de l'invention concerne une utilisation de la couche polymère telle que définie dans la présente invention, en tant que couche résistante aux rayures selon la norme ISO 1518.

D'autres caractéristiques et avantages de la présente invention apparaîtront à la lumière de la description d'un exemple non limitatif d'une composition polymère selon l'invention ainsi que d'exemples de câbles d'énergie et/ou de télécommunication selon l'invention fait en référence aux figures.

La figure 1 représente une vue schématique en coupe transversale d'un câble électrique selon un premier mode de réalisation conforme à l'invention.

La figure 2 représente une vue schématique en coupe transversale d'un câble électrique selon un deuxième mode de réalisation conforme à l'invention.

Pour des raisons de clarté, seuls les éléments essentiels pour la compréhension de l'invention ont été représentés de manière schématique, et ceci sans respect de l'échelle.

Le tableau 1 ci-dessous rassemble des compositions polymères dont les quantités des constituants sont exprimées en pourcentages (%) en poids par rapport au poids total de la composition polymère. Les compositions C1 et C2 correspondent à des essais comparatifs, la composition I1 étant conforme à l'invention.

**Tableau 1**

| Composition polymère | C1 | C2 | I1 |
|---|---|---|---|
| PE | 0 | 34 | 41 |
| PP | 0 | 63 | 0 |
| Ionomère | 97 | 0 | 56 |
| Charges et Additifs | 3 | 3 | 3 |

L'origine des composés du tableau 1 est la suivante :
- PE est un homopolymère d'éthylène de haute densité avec un MFI *(Melt Flow Index)* (190 °C/2,16kg) de 0,25 g/10 min (selon la norme ASTM D1238), commercialisé par la société Unipetrol sous la référence LITEN ZB 29;
- PP est un homopolymère de propylène, commercialisé par la société Unipetrol sous la référence Mosten EH 801 ;
- Ionomère est un copolymère d'éthylène et d'acide méthacrylique associé à un cation métallique de type Zinc, commercialisé par la société Dupont sous la référence Surlyn 9520 (MFI (190 °C/2,16kg) de 1,1 g/10 min, selon la norme ASTM D1238).
- Charges et additifs comprennent 1% en poids de talc commercialisé par la société Luzenac, et 2% en poids d'un agent compatibilisant commercialisé par la société Strucktol sous la référence Struktol TPW 243.

Les charges et additifs sont identiques dans les compositions C1, C2 et I1.

Les compositions rassemblées dans le tableau 1 sont mises en oeuvre comme suit.

On mélange tout d'abord l'ensemble des constituants d'une composition (C1, C2 ou I1) dans une extrudeuse bi-vis, à une température de 200°C, pour former des joncs extrudés.

Les joncs extrudés sont ensuite trempés, en sortie de filière, dans un bain d'eau, puis séchés à l'aide de deux séchoirs en série, et enfin découpés en granulés à l'aide d'un broyeur. Les granulées ont subi un deuxième séchage dans une étuve à 60°C pendant deux heures.

A partir de ces granulés, on forme ensuite des plaques moulées à 200°C à l'aide d'une presse, ces plaques étant de forme rectangulaire de 10 cm x 20 cm et de 1 mm d'épaisseur.

Une fois refroidi, ces plaques sont soumises au test de rayures selon la norme ISO 1518 *(Scratch Resistance Test).* Dans ce test, on mesure qualitativement la pénétration sous charge de la profondeur résiduelle d'une aiguille métallique appliquée avec des forces variables et sous translation.

La mesure qualitative visuelle de la formation de la rayure est notée « 0 » lorsqu'aucune rayure n'a été formée, « 1 » lorsqu'une rayure très légère a été formée, « 2 » lorsqu'une rayure légère a été formée, « 3 » lorsqu'une rayure relativement forte a été formée, et « 4 » lorsqu'une rayure forte a été formée.

Les résultats sont rassemblés dans le tableau 2 ci-dessous, pour des forces appliquées comprises entre 2 et 16 Newton (N).

**Tableau 2**

| Force appliquée (N) | C1 | C2 | I1 |
|---|---|---|---|
| 2 | 0 | 1 | 0 |
| 4 | 0 | 1 | 0 |
| 6 | 1 | 2 | 1 |
| 8 | 2 | 2 | 1 |
| 10 | 2 | 3 | 1 |
| 12 | 3 | 3 | 2 |
| 14 | 3 | 4 | 2 |
| 16 | 4 | 4 | 3 |
| Total | 15 | 20 | 10 |

Les résultats obtenus montrent clairement que la composition polymère de l'invention (I1) présente une résistance aux rayures supérieure à celle obtenue avec une composition uniquement à base de ionomère (C1) ou à celle obtenue avec une composition comprenant un mélange de polypropylène et de polyéthylène (C2). En effet, la somme des mesures qualitatives sur l'ensemble des forces appliquées de 2 à 16 N obtenue à partir de la composition I1 (somme égale à 10) est bien inférieure à celle obtenue à partir des compositions comparatives C1 et C2 (sommes respectivement égales à 15 et 20).

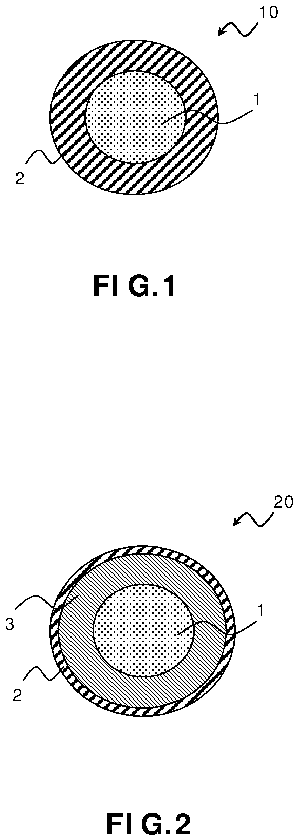

Les figures 1 et 2 représentent une vue schématique en coupe transversale d'un câble électrique respectivement selon un premier mode et un deuxième mode de réalisation, conformes à l'invention.

Le câble d'énergie et/ou de télécommunication représenté sur la figure 1 est un câble électrique 10 comprenant un élément électriquement conducteur central allongé 1 en cuivre ou en alliage de cuivre, autour duquel est extrudée une couche polymère 2 conforme à l'invention. Cette dernière, du type thermoplastique, peut être par exemple une couche électriquement isolante, obtenue à partir de la composition I1 du tableau 1. La couche polymère 2 présente non seulement une très bonne résistance aux rayures, mais également une très bonne adhésion avec l'élément électriquement conducteur 1.

Le câble d'énergie et/ou de télécommunication représenté sur la figure 2 est un câble électrique 20 comprenant un élément électriquement conducteur central allongé 1 en cuivre ou en alliage de cuivre, entouré par la couche polymère 2 de l'invention. Une couche intermédiaire 3 est quant à elle positionnée entre l'élément électriquement conducteur central 1 et la couche polymère 2. La couche polymère 2 ainsi que la couche intermédiaire 3 sont deux couches extrudées, la couche intermédiaire 3 étant une couche directement en contact physique avec l'élément électriquement conducteur central 1 d'une part, et la couche polymère 2 d'autre part.

La couche polymère 2 de la figure 2 peut être celle décrite dans la figure 1.

La couche intermédiaire 3 peut être une couche électriquement isolante, obtenue à partir d'une composition polymère comprenant au moins un polymère choisi parmi le premier polymère, le second polymère, et leur mélange.

La couche intermédiaire 3 présente une très bonne adhésion à la couche polymère 2 ainsi qu'à l'élément électriquement conducteur 1.

## Revendications

1. Câble d'énergie et/ou de télécommunication (10, 20) comprenant un élément conducteur allongé (1) entouré par au moins une couche polymère (2), **caractérisé en ce que** la couche polymère (2) est obtenue à partir d'une composition polymère comprenant
- un premier polymère de type éthylénique, le Melt Flow Index (MFI) du premier polymère étant strictement inférieur à 2,0 g/10 min (190°C/2,16kg) selon la norme ASTM D1238, et
- un second polymère d'éthylène comprenant des groupements ioniques, la quantité du second polymère étant supérieure à la quantité du premier polymère, dans la composition polymère, la composition polymère comprenant plus de 40% en poids du second polymère.

2. Câble selon la revendication 1, **caractérisé en ce que** le premier polymère est un polymère d'éthylène.

3. Câble selon la revendication 1, **caractérisé en ce que** le premier polymère est choisi parmi un polyacétate de vinyle (PVAc), un alcool polyvinylique (PVA), un polychlorure de vinyle (PVC), un polyfluorure de vinylidène (PVDF), un polyfluorure de vinyle (PVF), et un de leurs mélanges.

4. Câble selon l'une quelconque des revendications précédentes, **caractérisé en ce que** les groupements ioniques du second polymère sont des groupements carboxylate ionique.

5. Câble selon l'une quelconque des revendications précédentes, **caractérisé en ce que** le second polymère est un copolymère d'éthylène et d'acide méthacrylique.

6. Câble selon l'une quelconque des revendications précédentes, **caractérisé en ce que** le second polymère est associé à un cation métallique choisi parmi le sodium, le potassium et le zinc.

7. Câble selon l'une quelconque des revendications précédentes, **caractérisé en ce que** la composition polymère comprend plus de 50 % en poids du second polymère.

8. Câble selon l'une quelconque des revendications précédentes, **caractérisé en ce que** la composition polymère comprend moins de 80 % en poids du second polymère.

9. Câble selon l'une quelconque des revendications précédentes, **caractérisé en ce que** la composition polymère comprend plus de 20% en poids du premier polymère.

10. Câble selon l'une quelconque des revendications précédentes, **caractérisé en ce que** la composition polymère comprend en outre une charge minérale inerte.

11. Câble selon l'une quelconque des revendications précédentes, **caractérisé en ce que** la couche polymère est la couche positionnée la plus à l'extérieure du câble.

12. Câble (20) selon l'une quelconque des revendications précédentes, **caractérisé en ce qu'**il comprend en outre une couche intermédiaire (3), positionnée entre l'élément conducteur allongé (1) et la couche polymère (2), ladite couche intermédiaire (3) étant obtenue à partir d'une composition polymère comprenant au moins un polymère choisi parmi le premier polymère, le second polymère, et leur mélange.

13. Utilisation de la couche polymère telle que définie dans l'une quelconque des revendications précédentes, en tant que couche résistante aux rayures selon la norme ISO 1518.

## Patentansprüche

1. Elektrisches und/oder Telekommunikationskabel (10, 20), umfassend ein verlängertes leitfähiges Element (1), umgeben von mindestens einer Polymerschicht (2), **dadurch gekennzeichnet, dass** die Polymerschicht (2) auf der Grundlage einer polymeren Zusammensetzung erhalten wird, umfassend:
- ein erstes Polymer vom Typ Ethylen, wobei der Melt Flow Index (MFI) des ersten Polymers strikt geringer als 2,0 g/10 min (190 °C/2,16 kg) gemäß der Norm ASTM D1238 ist, und
- ein zweites Ethylenpolymer, umfassend ionische Gruppierungen, wobei die Menge des zweiten Polymers größer als die Menge des ersten Polymers in der Polymerzusammensetzung ist, wobei die Polymerzusammensetzung mehr als 40 Gew% des zweiten Polymers umfasst.

2. Kabel nach Anspruch 1, **dadurch gekennzeichnet, dass** das erste Polymer ein Ethylenpolymer ist.

3. Kabel nach Anspruch 1, **dadurch gekennzeichnet, dass** das erste Polymer ausgewählt ist aus Polyvinylacetat (PVAc), Polyvinylalkohol (PVA), Polyvinylchlorid (PVC), Polyvinylidenfluorid (PVDF), Polyvinylfluorid (PVF) und einer ihrer Mischungen.

4. Kabel nach einem beliebigen der vorhergehenden Ansprüche, **dadurch gekennzeichnet, dass** die ionischen Gruppierungen des zweiten Polymers ionische Carboxylatgruppierungen sind.

5. Kabel nach einem beliebigen der vorhergehenden Ansprüche, **dadurch gekennzeichnet, dass** das zweite Polymer ein Ethylen- und Methacrylsäureester-Copolymer ist.

6. Kabel nach einem beliebigen der vorhergehenden Ansprüche, **dadurch gekennzeichnet, dass** das zweite Polymer mit einem Matallkation assoziiert ist, ausgewählt aus Natrium, Kalium und Zink.

7. Kabel nach einem beliebigen der vorhergehenden Ansprüche, **dadurch gekennzeichnet, dass** die Polymerzusammensetzung mehr als 50 Gew% des zweiten Polymers umfasst.

8. Kabel nach einem beliebigen der vorhergehenden Ansprüche, **dadurch gekennzeichnet, dass** die Polymerzusammensetzung mehr als 80 Gew% des zweiten Polymers umfasst.

9. Kabel nach einem beliebigen der vorhergehenden Ansprüche, **dadurch gekennzeichnet, dass** die Polymerzusammensetzung mehr als 20 Gew% des ersten Polymers umfasst.

10. Kabel nach einem beliebigen der vorhergehenden Ansprüche, **dadurch gekennzeichnet, dass** die Polymerzusammensetzung außerdem eine inerte Mineralladung umfasst.

11. Kabel nach einem beliebigen der vorhergehenden Ansprüche, **dadurch gekennzeichnet, dass** die Polymerschicht die Schicht ist, die am weitesten an der Außenseite des Kabels positioniert ist.

12. Kabel nach einem beliebigen der vorhergehenden Ansprüche, **dadurch gekennzeichnet**, außerdem eine Zwischenschicht (3) umfasst, die zwischen dem verlängerten leitfähigen Element (1) und der Polymerschicht (2) angebracht ist, wobei die Zwischenschicht (3) auf der Grundlage einer Polymerzusammensetzung erhalten wird, umfassend mindestens ein Polymer, ausgewählt aus dem ersten Polymer, dem zweiten Polymer und ihrer Mischung.

13. Verwendung der Polymerschicht, wie in einem beliebigen der vorhergehenden Ansprüche definiert, als kratzfeste Schicht gemäß der Norm ISO 1518.

## Claims

1. Power and/or telecommunication cable (10, 20) comprising an elongate conductive element (1) surrounded by at least one polymeric layer (2), **characterized in that** the polymeric layer (2) is obtained from a polymer composition comprising:
- a first polymer of ethylene type, the Melt Flow Index (MFI) of the first polymer being strictly lower than 2.0 g/10 min (190°C/2, 16 kg) as per standard ASTM D 1238, and
- a second ethylene polymer comprising ionic groups, the amount of second polymer being higher than the amount of first polymer, in the polymer composition, the polymer composition comprising more than 40 weight % of the second polymer.

2. The cable according to claim 1, **characterized in that** the first polymer is an ethylene polymer.

3. The cable according to claim 1, **characterized in that** the first polymer is selected from among a polyvinyl acetate (PVAc), polyvinyl alcohol (PVA), polyvinyl chloride (PVC), polyvinylidene fluoride (PVDF), polyvinyl fluoride (PVF) and one of the mixtures thereof.

4. The cable according to any of the preceding claims, **characterized in that** the ionic groups of the second polymer are carboxylate ionic groups.

5. The cable according to any of the preceding claims, **characterized in that** the second polymer is a copolymer of ethylene and methacrylic acid.

6. The cable according to any of the preceding claims, **characterized in that** the second polymer is associated with a metal cation selected from among sodium, potassium and zinc.

7. The cable according to any of the preceding claims, **characterized in that** the polymer composition comprises more than 50 weight % of the second polymer.

8. The cable according to any of the preceding claims, **characterized in that** the polymer composition comprises less than 80 weight % of the second polymer,

9. The cable according to any of the preceding claims, **characterised in that** the polymer composition comprises more than 20 weight % of the first polymer.

10. The cable according to any of the preceding claims, **characterized in that** the polymer composition further comprises an inert mineral filler.

11. The cable according to any of the preceding claims, **characterized in that** the polymeric layer is the outermost layer of the cable.

12. The cable (20) according to any of the preceding claims, **characterized in that** it further comprises an intermediate layer (3) positioned between the elongate conductive element (1) and the polymeric layer (2), said intermediate layer (3) being obtained from a polymer composition comprising at least one polymer selected from among the first polymer, the second polymer and mixture thereof.

13. Use of the polymeric layer such as defined in any of the preceding claims, as scratch-resistant layer in accordance with standard ISO 1518.
